Europäisches Patentamt

European Patent Office

Office européen des brevets

(11) Veröffentlichungsnummer: **0 519 426 A2**

(12) **EUROPÄISCHE PATENTANMELDUNG**

(21) Anmeldenummer: **92110227.3**

(22) Anmeldetag: **17.06.92**

(51) Int. Cl.5: **F23G 7/10**

(30) Priorität: **20.06.91 DE 4120304**

(43) Veröffentlichungstag der Anmeldung:
**23.12.92 Patentblatt 92/52**

(84) Benannte Vertragsstaaten:
**AT CH DE FR GB LI**

(71) Anmelder: **Schuster, Siegfried**
**Leitersberg 4**
**W-8922 Peiting(DE)**

(72) Erfinder: **Schuster, Siegfried**
**Leitersberg 4**
**W-8922 Peiting(DE)**

(74) Vertreter: **Seidel, Herta, Dipl.-Phys.**
**Siedlungsstrasse 3**
**W-8267 Lohkirchen Lkrs. Mühldorf/Inn(DE)**

(54) **Verfahren und Vorrichtung zur Erzeugung von Energie aus einer Biomasse.**

(57) Ein Verfahren zur Erzeugung von Energie, bei dem eine Biomasse, die durch natürlichen Aufwuchs der Landschaft gebildet ist, verbrannt wird und eine Vorrichtung zur Durchführung des Verfahrens, die eine Fördereinrichtung (6,7) zur Übernahme und zum Transport des getrockneten natürlichen Aufwuchses innerhalb einer Verbrennungsanlage eine Dosiervorrichtung (9,10,11,12) für die Zulieferung einer bestimmbaren Menge des getrockneten natürlichen Aufwuchses an den Verbrennungsbereich der Verbrennungsanlage und Vorrichtungen (3) zur Nutzung und/oder Umwandlung der bei der Verbrennung entstehenden Wärme bzw. Gase.

Fig.

Die Erfindung betrifft ein Verfahren zur Erzeugung von Energie (Wärmeenergie, elektrische Energie, mechanische Energie), bei dem Biomasse verbrannt und die entstehende Wärme und/oder die dabei gebildeten Gase zu Heizzwecken und/oder zur Erzeugung von Strom und/oder als mechanische Energie Verwendung finden sowie eine Vorrichtung zur Durchführung des Verfahrens.

Es ist bereits bekannt, anstelle von fossilen Brennstoffen mit hoher Umweltbelastung zur Erzeugung von Strom, Wärme sowie von mechanischer Energie Biobrennstoffe, nämlich Stroh und Restholz zu verwenden. Der Grund hierfür liegt einerseits darin, daß diese Brennstoffe als $CO_2$-neutrale Brennstoffe umweltfreundliche Energieversorgungsanlagen ermöglichen, daß also die hohe Umweltbelastung der fossilen Brennstoffe vermieden wird, andererseits aber auch darin, daß Strohreste und Holzabfälle natürliche, dauerhafte, inländisch verfügbare Energiequellen darstellen.

Es hat sich aber gezeigt, daß die Gewinnung der genannten Biobrennstoffe arbeits- und kostenaufwendig ist, da das erst bei der Getreideernte anfallende Stroh bedingt, daß zunächst entsprechende Anbauflächen für Getreide geschaffen werden müssen, um überhaupt ausreichend Stroh zu bekommen. Das heißt, man muß pflügen, säen und das Getreide ernten und kann erst danach das Stroh für sich verbrauchen.

Ferner bedeutet die Gewinnung von Stroh nach der Getreideernte einen nochmaligen Arbeitseinsatz sowie eine erneute Feldbearbeitung, um im darauffolgenden Jahr wiederum ausreichende Strohmengen zur Verfügung zu haben.

Entsprechend ist auch die Gewinnung der Holzreste aus den Wälern mit zusätzlichem Zeit- und Kostenaufwand verbunden, da die Holzabfälle zunächst in Zerkleinerungsvorrichtungen verarbeitet werden müssen, bevor sie an eine Verbrennungsanlage für Biomasse angeliefert und dort verbrannt werden können.

Der Erfindung liegt daher die Aufgabe zugrunde, das bekannte Verfahren zur Energiegewinnung aus Biomasse kostengünstiger, das heißt zumindest selbstfinanzierend und insgesamt wirtschaftlicher zu gestalten.

Dies wird dadurch erreicht, daß als Biomasse natürlicher Aufwuchs der Landschaft herangezogen wird.

Dieser natürliche Aufwuchs der Landschaft umfaßt insbesondere Gras, wie es auf den landwirtschaftlichen Feldern, insbesondere auf den aus ökonomischen Gründen nicht mehr landwirtschaftlich genutzten Grünflächen ohne Düngung oder sonstigen Arbeitsaufwand heranwächst und wie es ferner auf Sport- und Parkflächen anfällt und bisher unter Einsatz von zusätzlichen Kosten verwertet werden mußte. Das heißt, es wird eine Biomasse verwendet, die als Massenrohstoff jährlich von selbst anfällt und deren Beseitigung aufgrund des erfindungsgemäßen Verfahrens gewinnbringend oder zumindest selbst finanzierend und ökologisch verträglich erfolgt.

Da der Brennwert von Heu größer ist als von Stroh oder von Abfallholz und der Hektarertrag von Heu außerdem auch noch höher ist als von Stroh, ist die Verwendung von Heu zur Energiegewinnung gegenüber den bisher verwendeten Biomassen erheblich vorteilhafter. Außerdem hat es sich gezeigt, daß die Produktionskosten von Heu vom Schnitt des Grases bis zum Einbringen in die Verbrennungsanlage erheblich niedriger liegen verglichen mit Stroh oder Restholz. Darüber hinaus darf nicht unbeachtet bleiben, daß das Landschaftsbild bei der Energiegewinnung aus Gras bzw. Heu unverändert bleiben kann. Die Gräser werden nämlich wie bisher in herkömmlicher Erntetechnik gemäht, gewendet und gezettet und mittels Sonnenenergie zu Heu getrocknet. Es fällt keine Mehrarbeit an, als man bisher sowieso aufzuwenden hatte. Das heißt, man benötigt keine zusätzlichen Arbeitsvorgänge, um zu dem Ausgangsstoff für die Energiegewinnung nach dem erfindungsgemäßen Verfahren zu gelangen. Das Heu kann wie bisher lose getrocknet werden und in die bereits bestehenden, aber nicht mehr voll genützten landwirtschaflichen Gebäude gebracht und dort ohne jeden zusätzlichen Kostenaufwand zwischengelagert werden. Man kann aber auch aus transporttechnischen Gründen die bekannten, in der Regel schon auf dem Feld hergestellten Heuballen in die Scheuern transportieren und dort solange lagern, bis das Heu als Brennstoff in einer Verbrennungsanlage gebraucht wird.

Ökonomisch sinnvoll ist es natürlich, die Wege zwischen dem Zwischenlager, in der Regel dem Bauernhof, und der Verbrennungsanlage so kurz wie möglich zu halten. Das heißt, die Verbrennungsanlagen sollten auf Dörfern, kleineren Städten und Randzonen von Ballungsgebieten eingerichtet werden. Dabei ist es sinnvoll, in der Verbrennungsanlage nur ein relativ kleines Pufferlager vorzusehen, das lediglich eine Brennstoffmenge für wenige Tage umfaßt, und sich sinnvoller Weise der Lagerung des Heues in den sowieso vorhandenen landwirtschaftlichen Gebäuden zu bedienen.

Eine Vorrichtung zur Durchführung des erfindungsgemäßen Verfahrens umfaßt eine Fördereinrichtung zur Übernahme und zum Transport des getrockneten natürlichen Aufwuchses innerhalb einer Verbrennungsanlage, eine Dosiervorrichtung für die Zulieferung einer bestimmbaren Menge getrockneten natürlichen Aufwuchses an den Verbrennungsbereich der Verbrennungsanlage und eine Vorrichtung zur Nutzung und/oder Umwandlung der bei der Verbrennung entstehenden Wärme bzw. Gase. Als Fördereinrichtung für die Übernahme und den Transport des bereits von der Zwischenlagerstätte zur Verbrennungsanlage gebrachten, getrockneten Grases innerhalb der Verbrennungsanlage, das heißt, von dem der Verbrennungsanlage zugehörigen Pufferlager zum eigentlichen Verbrennungsbereich, dient vorzugsweise eine Krananlage, die einen mit einer Bedarfssteuerung ausgestatteten Selbstgreifer aufweist. Dieser Kran hat die Aufgabe, die erforderlichen Mengen von Heu entsprechend dem jeweiligen Wärmebedarf aus dem Pufferlager der Dosiereinrichtung zuzuführen, die vorzugsweise als eine Fördereinrichtung ausgebildet ist, die eine Förderschnecke, ein Förderband oder eine Förderschubstange umfaßt, mit denen das Heu dem Verbrennungsofen zugeführt wird.

Die bei der Verbrennung entstehende Wärme kann dann, wie allgemein üblich, über Wärmetauscher einem Verbrauch zugeführt werden. Dieser Verbrauch kann entweder als Fernwärmesystem für eine Wohnanlage gestaltet sein. Die Wärme kann aber auch zur Erzeugung von Strom dienen oder zum Antrieb von Dampf- und oder Heizluftturbinen Verwendung finden.

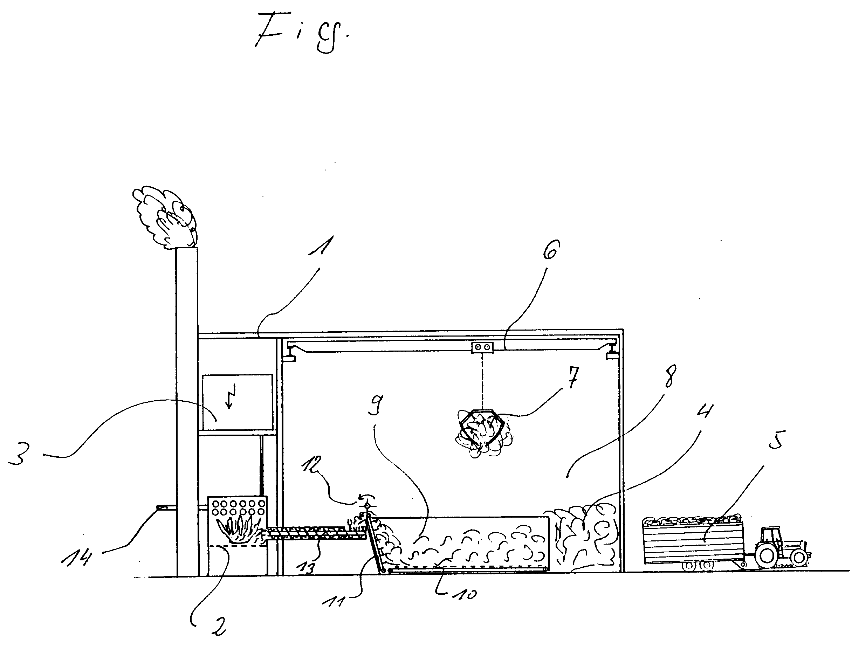

Weitere Merkmale der Erfindung ergeben sich aus den Unteransprüchen sowie aus der nachstehenden Beschreibung einer schematischen Darstellung einer Vorrichtung zur Durchführung des erfindungsgemäßen Verfahrens, die als eine einzige Figur beigefügt ist.

Aus einem nicht gezeigten Zwischenlager wird das dort gelagerte Heu mittels eines in der Landwirtschaft sowieso vorhandenen Schleppers 5 an die Verbrennungsanlage, die als Heizkraftwerk 1 beispielsweise hier gezeigt ist, angeliefert und dort als Verbrennungsmaterial in einem Pufferlager 4 des Heizkraftwerks 8 gelagert. Eine in dem Heizkraftwerk 8 installierte Krananlage 6 mit einem Selbstgreifer 7 bringt das Heu aus dem Pufferlager 4 in dosierter Menge in einen Dosierbehälter 9. Dieser Dosierbehälter 9 besteht aus einem zwei bis fünf Meter breiten und bis etwa dreißig Meter langen und bis zu fünf Meter hohen Raum (die Maße können jedoch nach Bedarf in der Praxis entsprechend dem Heizbedarf größer oder kleiner gewählt sein).

Der Dosierbehälter 9 umfaßt einen Förderboden 10, einen Hochförderer 11 sowie einen Zurückhalterechen 12, der die eigentliche Dosiervorrichtung darstellt. Das getrocknete Gras wird mit Hilfe der Dosiereinrichtung 9 in automatisch gesteuerter Menge zu einer Förderschnecke 13 gebracht und von dieser dem Brennofen 2 zugeführt. Die Verbrennung in dem Brennofen 2 ist umweltneutral, das heißt, die Feuertechnik erlaubt es, die Emission der Abgase so niedrig wie möglich zu halten. Zur Erhöhung der Effektivität der bei der Verbrennung erhaltenen Wärme ist eine Kraft-Wärmekopplung 3 vorgesehen. Ferner ist eine Ringleitung 14 vorgesehen, über die die Fernwärmeversorgung von Wohngebieten erfolgen kann.

## Patentansprüche

1. Verfahren zur Erzeugung von Energie (Wärmeenergie, elektrische Energie, mechanische Energie), bei dem Biomasse verbrannt und die entstehende Wärme und/oder die dabei gebildeten Gase zu Heizzwecken und/oder zur Erzeugung von Strom und/oder als mechanische Energie Verwendung finden, **dadurch gekennzeichnet**, daß die Biomasse durch natürlichen Aufwuchs der Landschaft gebildet ist.

2. Verfahren nach Anspruch 1, **dadurch gekennzeichnet**, daß der natürliche Aufwuchs der Landschaft aus Gras besteht.

3. Verfahren nach Anspruch 1 oder 2, **dadurch gekennzeichnet**, daß Gras von nicht mehr für die Landwirtschaft nutzbaren Grünflächen Verwendung findet.

4. Verfahren nach einem der Ansprüche 1 bis 3, **dadurch gekennzeichnet**, daß das Gras als Schnittgras von Sport- und Parkanlagen anfällt.

5. Verfahren nach einem der Ansprüche 1 bis 4, **dadurch gekennzeichnet**, daß das Gras in geschnittenem Zustand an seinem Standort getrocknet wird und daß das Heu, gegebenenfalls nach einer Zwischenlagerung, in einem Verbrennungssystem (Heizkraftwerk) verbrannt wird.

6. Verfahren nach einem der Ansprüche 1 bis 5, **dadurch gekennzeichnet**, daß das Trocknen des geschnittenen Grases zu Heu mit Sonnenenergie erfolgt.

7. Verfahren nach einem der Ansprüche 1 bis 6 , **dadurch gekennzeichnet**, daß die Zwischenlagerung des Heues in loser Form erfolgt.

8. Verfahren nach einem der Ansprüche 1 bis 7, **dadurch gekennzeichnet**, daß das Heu in gepreßter Form zur Zwischenlagerung gebracht wird.

9. Verfahren nach einem der Ansprüche 1 bis 8, **dadurch gekennzeichnet**, daß das Heu entweder von seinem Standort unmittelbar oder von seiner Zwischenlagerungsstätte dosiert der Verbrennung zugeführt wird.

10. Vorrichtung zur Durchführung des Verfahrens nach einem der Ansprüche 1 bis 9, **gekenn-**

zeichnet durch eine Fördereinrichtung (6,7) zur Übernahme und zum Transport des getrockneten natürlichen Aufwuchses innerhalb eine Verbrennungsanlage, eine Dosiervorrichtung (9,10,11,12) für die Zulieferung einer bestimmbaren Menge natürlichen Aufwuchses an den Verbrennungsbereich der Verbrennungsanlage und eine Vorrichtung (3) zur Nutzung und/oder Umwandlung der bei der Verbrennung entstehenden Wärme bzw. Gase.

11. Vorrichtung nach Anspruch 10, dadurch gekennzeichnet, daß die Fördereinrichtung als eine Krananlage ausgebildet ist, die vorzugsweise mit einem Selbstgreifer (7) ausgestattet ist, dem eine Bedarfssteuerung zugeordnet ist.

12. Vorrichtung nach Anspruch 10 oder 11, dadurch gekennzeichnet, daß die Dosiervorrichtung als ein Sammelbehälter (10) ausgebildet ist, der mit einer Fördereinrichtung (Förderschnecke, Förderband, Förderschubstange) (10,11,12) verbunden ist, mit der das zu verbrennende Gut einem Verbrennungsofen (2) zuzuführen ist.

13. Vorrichtung nach einem der Ansprüche 10 bis 12, dadurch gekennzeichnet, daß die in der Verbrennungsanlage (1) erzeugte Wärme über Wärmetauscher (14) dem Verbraucher (z.B. Fernwärmeversorgung von geschlossenen Wohneinheiten) zugeführt wird.

14. Vorrichtung nach einem der Ansprüche 10 bis 13, dadurch gekennzeichnet, daß die in der Verbrennungsanlage gebildeten Gase zum Antrieb von Turbinen oder Verbrennungsmotoren einsetzbar sind.

15. Vorrichtung nach einem der Ansprüche 10 bis 14, dadurch gekennzeichnet, daß die erzeugte Wärme zur Erzeugung von elektrischem Strom über Wärmekraftkopplung (3) verwendbar ist.

Fig.